# EUROPEAN PATENT APPLICATION

(11) **EP 4 327 986 A2**
(43) Date of publication of application: **28.02.2024**
(21) Application number: 23190712.2
(22) Date of filing: 10.08.2023
(51) Int. Cl.: B25J 9/16, B25J 19/02

(54) **ROBOTIC GRIPPER ALIGNMENT MONITORING SYSTEM**

(30) Priority: 26.08.2022 US 202217822532
(71) Applicant: Körber Supply Chain LLC, DFW Airport, Texas 75261 (US)
(72) Inventor: Thondarampattu Vasudevan, Vimalanath, Lewisville (US); Lawson, Ken, Cumming (US)
(74) Representative: Müller Schupfner & Partner Patent- und Rechtsanwaltspartnerschaft mbB

(57) **Abstract**

A method and system are provided for real-time predictive failure monitoring of a robotic gripper alignment. A sensor board embedded in a robotic gripper includes a plurality of sensors to generate sensor data comprising motion data, inclination data and accelerometer data. Sensor board includes an alignment classification engine using machine learning based models to classify alignment and misalignment configuration of the robotic gripper based on received sensor data. Notification is sent to a user interface for both correct alignment and misalignment classifications in real-time.

## Description

### TECHNICAL FIELD

This application relates to equipment monitoring. More particularly, this application relates to predictive failure monitoring for misalignment of a robotic gripper.

### BACKGROUND

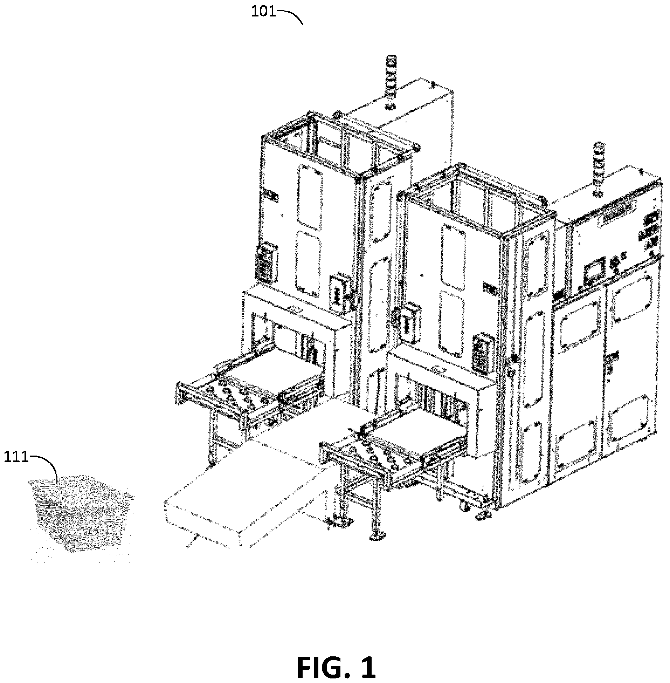

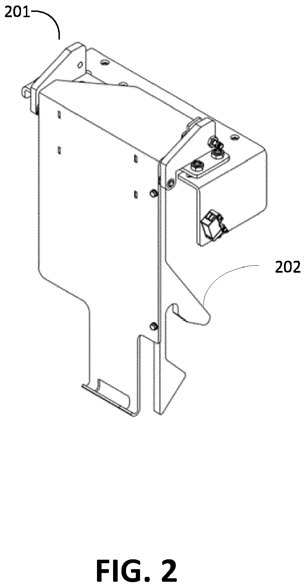

Robotic grippers are widely used in automated parcel distribution and material processing facilities. As an illustrative example, FIG. 1 shows an automated tote stacking system 101 designed to stack and unstack totes 111 (e.g., bins, trays, or the like) used as a transport container for moving materials on a system of conveyors. A key component in a stacking robot is the gripper 201, as illustrated in FIG. 2, which is a simple mechanical end effector with electromechanical actuation and a metal hook 202 to grab, manipulate and release the tote 111.

Gripping functionality is achieved by the mechanical design and its precise alignment with respect to the tote stack. A failure point for robotic grippers is that proper alignment can be broken during installation or operation, preventing proper grasp of the tote, rendering the automated tote stacking system 101 inoperable. Gripper failure can arise from misalignment caused by various reasons, such as imprecise installation, or gradual slippage of fasteners over the course of repetitive task operations. The gripper alignment may not get any attention from maintenance staff until it fails to operate.

Hence, alignment calibration is required during installation and routine maintenance. This calibration, however, involves repeated manual testing and observation to make recommended alignments. Current procedures for calibration leave the validation and alignment to human installer/maintenance technician /operator to fully inspect all gripper alignment points after a functional failure or part of preventive maintenance. However, this procedure is incapable of predicting a functional failure, an early-stage misalignment, or a tote integrity-related issue related to the tote stacking system operation.

Currently, there are no automated means to monitor or diagnose gripper alignment deviations and repeated manual intervention is required to diagnose the alignment deviations. Nor is there any system to provide unambiguous information to maintenance technicians from various alignment points to determine which alignment point has the condition of interest and what procedure is to be followed. A need exists for a fully automated gripper alignment monitoring system that can easily notify installers and maintenance technicians of any alignment issue or other maintenance need of the gripper and provide unambiguous information regarding identified issues and failure predictions.

### SUMMARY

Aspects of the present disclosure provide a method and system for real-time predictive failure monitoring of a robotic gripper alignment. A sensor board embedded in a robotic gripper includes a plurality of sensors to generate sensor data comprising motion data, inclination data and accelerometer data. Sensor board includes a processor and an alignment classification engine using machine learning based models to classify alignment and misalignment configuration of the robotic gripper based on received sensor data. Notification is sent to a user interface for both correct alignment and misalignment classifications in real-time.

Aspects of the present disclosure further provide engine incorporating proximity sensor data and event data detected by a main controller for classification of alignment and misalignment configuration of the robotic gripper.

Aspects of the present disclosure further provide classification and notification of a damaged tote based on audio sensor data.

### BRIEF DESCRIPTION OF THE DRAWINGS

Non-limiting and non-exhaustive embodiments of the present embodiments are described with reference to the following FIGURES, wherein like reference numerals refer to like elements throughout the drawings unless otherwise specified.
FIG. 1 illustrates an example of a tote stacking system.
FIG. 2 illustrates an example of a robotic gripper.
FIG. 3 illustrates various instances of detectable gripper misalignment locations for monitoring according to embodiments of this disclosure.
FIG. 4 illustrates an example of control system hardware for performing gripper alignment monitoring in accordance with embodiments of this disclosure.
FIG. 5 illustrates an example of a software architecture for gripper alignment monitoring in accordance with embodiments of this disclosure.
FIG. 6 is a flowchart illustration of an example method for continuous monitoring of the gripper alignment in accordance with embodiments of this disclosure.

### DETAILED DESCRIPTION

Methods and systems are disclosed to solve the technical problem of continuous preventative failure monitoring a gripper alignment of a robotic device used in an automated material processing system. In contrast with conventional approaches for monitoring, the disclosed embodiments improve the reliability of robotic grippers through real time continuous monitoring of gripper alignment. Using the automated monitoring method of this disclosure eliminates slow and unreliable manual preventive maintenance and gripper alignment verification procedures. The disclosed system has a novel gripper design with an inbuilt sensing and processor core for accurate monitoring capability. The embedded sensing computer is configured as constrained edge device (i.e., limited single core processing functionality) with a machine learning core to execute machine learning (ML) processing for classification of detected misalignments. In contrast with the disclosed compact single multi-sensor node, conventional monitoring consists of binary failure notification without context, by a wide physical arrangement of multiple sensor installations. An Edge Gateway computer provides means for performing all edge processing from all constrained edge gripper devices. The disclosed system recommends the most probable alignments required, thereby reducing manual inspection time. The gripper alignment monitoring system provides automatic notification to the maintenance team of any gripper alignment deviations by triggering a warning to avoid functional failure and positive confirmation when the gripper is properly aligned. Moreover, the gripper alignment monitoring system provides a preventative measure against failure of the robotic gripper from executing grasping tasks by early detection of alignment deviations, unlike conventional maintenance which often finds misalignment only after system failure.

The embodiments of this disclosure are described with reference to a robotic gripper arrangement in which a pair of grippers, such as gripper 201 illustrated in FIG. 2, operate in tandem to grasp a tote used for material transport in an automated material processing facility. The grippers may be positioned so as to face each other. Grasping may relate to stacking, unstacking, transporting, or other operations related to grasping. However, the functionality of the gripper alignment monitoring system is not limited to this particular arrangement of robotic grippers and is easily applicable to any number of robotic grippers to be monitored. Nor is the particular geometry or topology of the gripper 201 essential to the installation of the topology gripper alignment monitoring system; variations to the basic structure of gripper 201 can be accommodated by disclosed system as described.

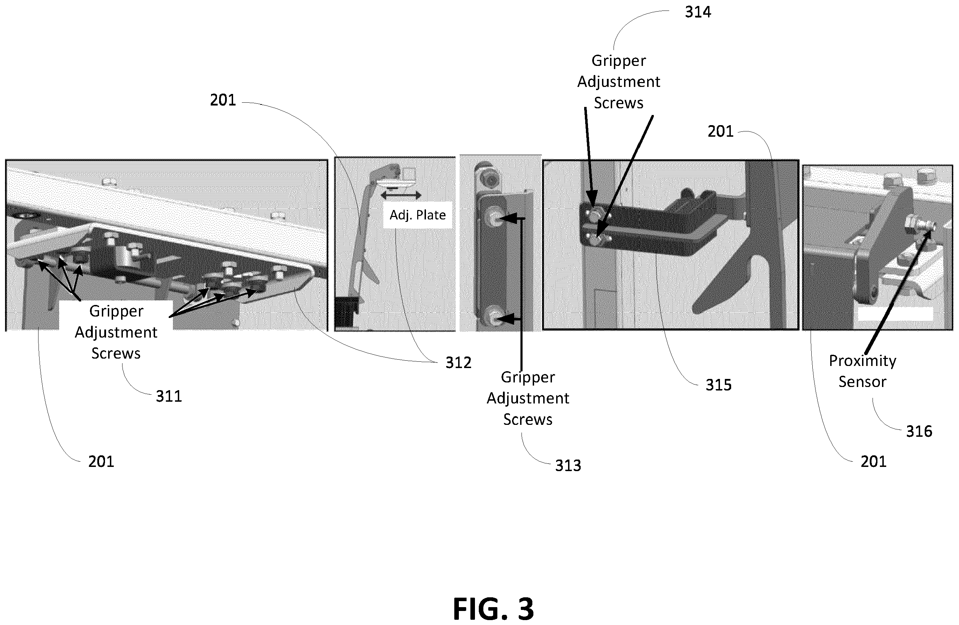

FIG. 3 illustrates examples of various instances of detectable gripper misalignment locations for monitoring according to embodiments of this disclosure. In an embodiment, vertical gripper assembly screws 311 are used to fasten lateral adjuster plate 312, which can slide as necessary for alignment of gripper 201. The vertical gripper assembly screws 311 may be oriented in the direction of gravity in an operation state of the gripper. In another embodiment, horizontal gripper adjustment screws 313 fasten the gripper to an actuator (e.g., a cam follower) and horizontal gripper adjustment screws 314 fasten gripper to a backstop support structure 315, both of which are adjustment points for alignment of the gripper. In an embodiment, proximity sensor 316, which is affixed to gripper 201 for guiding actuation of the gripper, may be misaligned or may malfunction, causing the actuator of gripper to overshoot or undershoot the target position for grasping the tote. Monitoring of such alignment fasteners and proximity sensors by the disclosed monitoring system can locate and prognosticate a potential misalignment before a failure occurs.

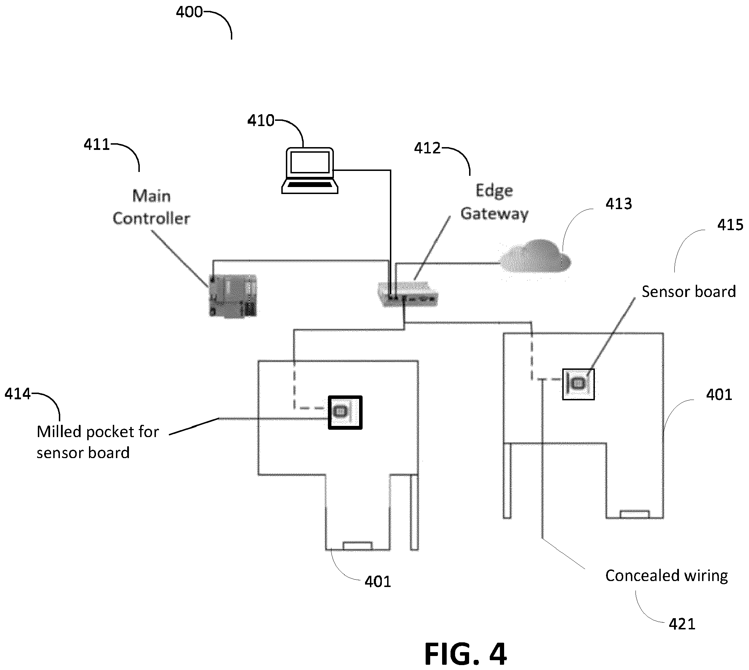

FIG. 4 illustrates an example of control system hardware for performing gripper alignment monitoring in accordance with embodiments of this disclosure. Control system 400 includes means to readily identify the alignment need of the robotic gripper or fleet of robotic grippers. Main controller 411, which may be implemented as a programmable logic controller, is configured to control the robotic gripper along with the remainder of the automated process system in which the gripper operates. Control system 400 includes a sensor board 415 having multiple embedded sensors (motion, inclination, accelerometer, and microphone), memory for software/firmware to execute machine learning classification, and a processor, altogether arranged in a printed microcircuit board. One or more of the sensors are configured with 3-axis sensing. The machine learning classification may be executed using a learning algorithm (e.g. a trained neural network). A neural network used for classification may be implemented as hardware, for example with fixed connections on a chip or other processing unit. The computational unit, which may execute the inventive method, may be any processing unit such as CPU (Central Processing Unit) or GPU (Graphics Processing Unit). The computational unit may be part of a computer, a cloud, a server, a mobile device such as a laptop, tablet computer, mobile phone, smartphone etc. In particular, the computational unit may be part of the system. The learning algorithm may be a classifier, for example. Further, the learning algorithm (machine learning classification) may be configured to map input data to desired output data. Learning may refer to a property that the algorithm may define a general model with parameters. The mapping of input data to output data may be a mathematical function depending on parameters. The algorithm may learn the mapping of input data to output data by adjusting its parameters for given pairs of input data and desired output data in such a way that the output of the algorithm is as similar as possible to the desired output. Similarity may be defined by a mathematical cost function (i.e. a mapping that takes the output and the desired output of the learning algorithm as input and transfers it to a real number), which has to be specified by a user (e.g. a developer). The lower the value (i.e. the real number) of the cost function, the more similar the output is to the desired output. The learning algorithm may be an artificial neural network. Accordingly, the learning algorithm may be trained. In addition, the learning algorithm may be retrained, too. Retraining may be similar to the training. The difference is that during training the learning algorithm may start with random values for its parameters. On the other hand, when the learning algorithm is retrained, the learning algorithm may start with the values of a previously trained learning algorithm. Therefore, retraining of the learning algorithm may be faster and more efficient as compared to the step of training. For training the learning algorithm, a training set may be used. The training set may be a collection of pairs of gripping actions and results thereof. The collection may be used to develop a learning algorithm that accepts the gripping actions as input and gives the corresponding results of the gripping actions as an output. The gripping actions may include information of the motion data 611, inclination data 612, accelerometer data 613, controller events 614 and/or audio sensor data 615. The result of the gripping action may include an information whether the tote is misaligned or not. In other words, the learning algorithm may be trained to recognize based on motion data 611, inclination data 612, accelerometer data 613, controller events 614 and/or audio sensor data 615 whether the gripping action will be successful or not.

Firmware on the sensor board is programmed with a trained classification model that can determine type of misalignment and/or cause of misalignment. In an embodiment, gripper 401 is configured with a precisely milled pocket 414 for housing the sensor board 415. The gripper 401 may have a similar configuration as the gripper 201 depicted in Fig. 2. The milled pocket 414 may be a recess within the gripper 401. The milled pocket 414 may be sealed with epoxy, polycarbonate cover, or the like for protection of the circuit board 415 and to fix the position of the sensor node flush with gripper body surface for optimized precision in calibration of gripper orientation. In an embodiment, the body of gripper 401 is configured with a physical channel to conceal wiring 421 which connects to sensor board 415 for power and data transmission. An advantage of a hard wired sensor board is for reliable power source rather than from a battery that requires recharging or periodic replacement. In an embodiment, wiring 421 conforms to a USB connection for both communication and powering the inbuilt gripper sensor node 415.

The embedded sensors, firmware/software and processor enable local monitoring and real time classification, eliminate the need for transfer of high-frequency multiple sensor data to edge gateway 412 or cloud 413 for the classification analysis. Local classification of gripper misalignment is communicated to a user interface 410 via edge gateway 412 as a maintenance notification.

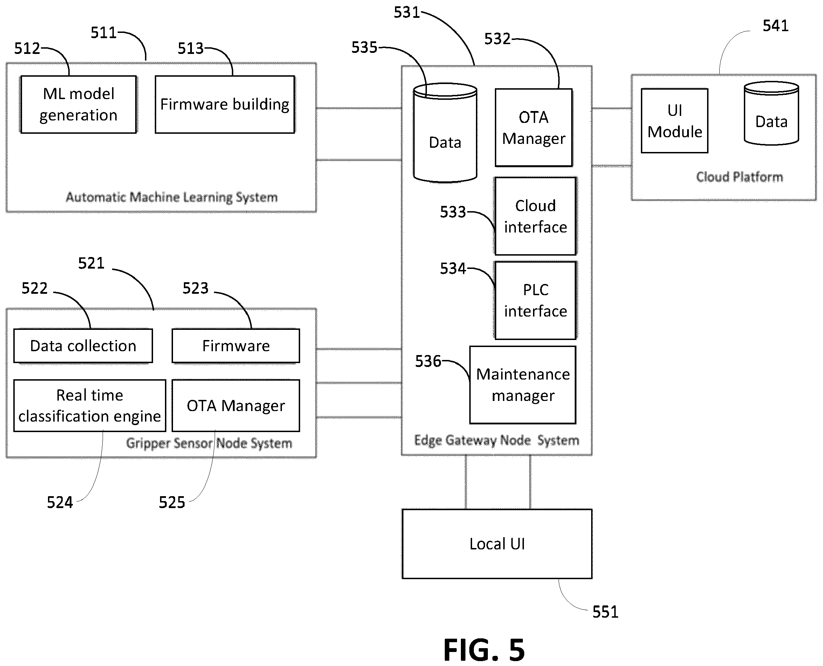

FIG. 5 illustrates an example of a software architecture for gripper alignment monitoring in accordance with embodiments of this disclosure. An automatic machine learning system 511 includes machine learning model generation module 512 and firmware building module 513. A gripper sensor node system 521 includes a data collection module 522, a firmware update module 523, a real-time classification engine 524, and an over-the-air (OTA) manager module 525. Edge gateway node system 531 includes data storage 535, OTA manager module 532, cloud interface module 533 and programmable logic controller (PLC) interface module 534. Cloud platform 541 includes a user interface module and cloud data storage. A local user interface 551 is available for communicating with the system components via edge gateway node system.

Automatic machine learning system 511 is used to generate misalignment classification models through machine learning model generation module 512. In an embodiment, the machine learning model generation module 512 implements an automatic machine learning (AutoML) algorithm for model selection and to generate a dynamic model to achieve misalignment classification through establishing the relation between alignment points, output data concerning good alignment obtained from multiple sensors and other data (e.g., PLC event data), and different types of bad alignment. Models may include clustering algorithms, neural networks or statistical models. Sensor readings of the 3 axis sensors along with other sensor data are checked for true positives, false positives, true negatives and false negatives. Criteria for assessing the classification models include examination of precision and recall according to metrics. Once trained, the system can label this relationship to various alignment needs using a database of alignment and replacement recommendations using an automatic machine learning module. Firmware building module 513 creates a firmware package for the trained AutoML models, which is deployed to the firmware module of gripper sensor node system 521 using a wired connection or an OTA download.

Gripper sensor node system 521 receives sensor data at data collection module 522 and real-time classification engine 524 classifies the sensor data using the models stored in firmware 523. Upon misalignment detection, the model determines which form of misalignment is most likely present. OTA manager 525 controls model downloads from automatic ML system 511 and transmissions of misalignment classification results to edge gateway node system 531. Alternatively, the data is transmitted over wired links.

Edge gateway node system 531 receives real-time misalignment classifications from gripper sensor node system 521 via OTA manager or a wired connection and stores in data storage 535. Misalignment classifications may be triggered by events detected by the PLC that controls the automated system in which the robotic gripper operates. PLC interface 534 receives the detected event information and stores in data storage 535. Using the real-time classification data and the event data, maintenance manager 536 determines the required maintenance adjustment and generates a maintenance notification which is sent to local Ul 551 or remote Ul module of cloud server 541. The maintenance notification may also be sent to a central condition and fleet monitoring system if used by the automation facility, either on premises or to cloud server 541.

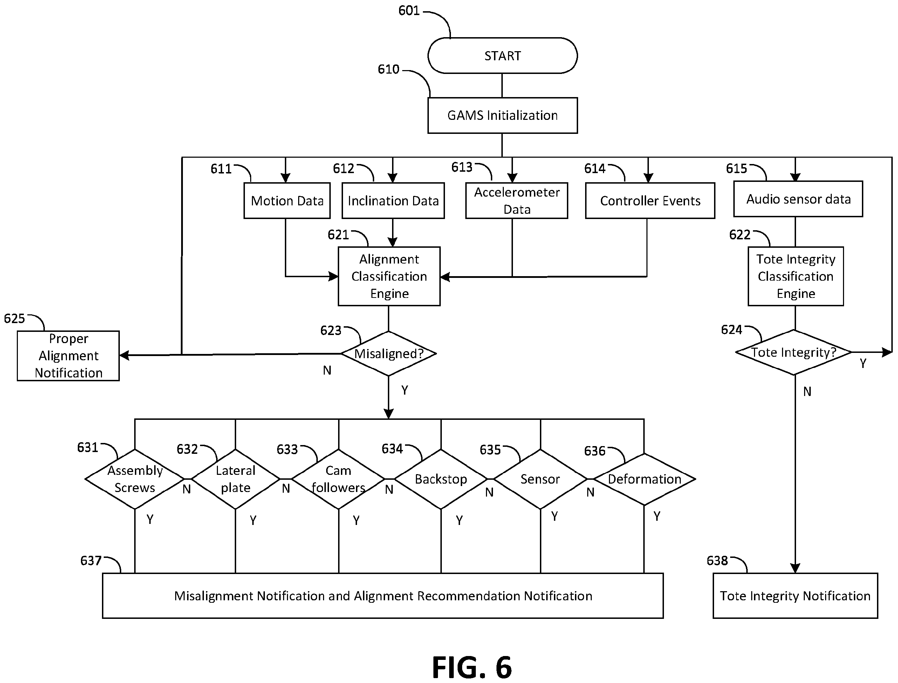

FIG. 6 is a flowchart illustration of an example method for continuous monitoring of the gripper alignment in accordance with embodiments of this disclosure. With trained models deployed in the gripper sensor node system 511, the gripper alignment monitoring process starts at 601 by initializing the gripper alignment monitoring system at 610. The system activates sources all data inputs which include one or more of the following: sensors providing inputs for motion data 611, inclination data 612, and accelerometer data 613; PLC connection for event data 614. Alignment classification engine 621 executes the classification models based on data inputs 611, 612, 613 and 614. Results are examined at 623 and if no misalignment classifications are determined, then a proper alignment notification 625 is sent to the user interface. If one or more misalignment classifications at 623 are determined, then misalignment diagnosis is performed by alignment classification engine to identify the most likely cause(s) for misalignment. In this example, the causes may include one or more of the following: assembly screws 631, lateral plate 632, cam followers 633, backstop 634, proximity sensor 635, or gripper deformation 636. A misalignment notification is generated and a realignment recommendation notification is sent to the user interface indicating a particular fastener location as the most likely cause for misalignment.

In an embodiment, additional sensor monitoring may be incorporated into the gripper alignment monitoring system, including but not limited to an audio sensor such as a micro-electro-mechanical microphone system (MEMS) which generates audio sensor data 615 to detect anomalous sounds indicative of damage to tote integrity. Such an audio sensor is placed in a location to capture sounds during tote handling or manipulation in the automated processing system. A specialized classification engine is trained to learn from audio data sensed by the microphone at the robotic gripper location and is capable of classifying a tote that having flaws with integrity, which may be the cause for gripper failure instead of a misalignment cause. During monitoring, if tote integrity check at 624 indicates a detected anomaly, a tote integrity notification 638 is sent to indicate a potentially damaged tote, otherwise there is no notification.

The embodiments of the present disclosure may be implemented with any combination of hardware and software. In addition, the embodiments of the present disclosure may be included in an article of manufacture (e.g., one or more computer program products) having, for example, a non-transitory computer-readable storage medium. The computer readable storage medium has embodied therein, for instance, computer readable program instructions for providing and facilitating the mechanisms of the embodiments of the present disclosure. The article of manufacture can be included as part of a computer system or sold separately.

Computer readable medium instructions for carrying out operations of the present disclosure may be assembler instructions, instruction-set-architecture (ISA) instructions, machine instructions, machine dependent instructions, microcode, firmware instructions, state-setting data, or either source code or object code written in any combination of one or more programming languages, including an object oriented programming language such as Smalltalk, C++ or the like, and conventional procedural programming languages, such as the "C" programming language or similar programming languages. The computer readable program instructions may execute entirely on the computing device, partly on the computing device, as a stand-alone software package, partly on the computing device and partly on a remote computer or entirely on the computing device or server. In the latter scenario, the remote computer may be connected to the computing device through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present disclosure.

Aspects of the present disclosure are described herein with reference to flowchart illustrations and/or block diagrams of methods, apparatus (systems), and computer program products according to embodiments of the disclosure. It will be understood that each block of the flowchart illustrations and/or block diagrams, and combinations of blocks in the flowchart illustrations and/or block diagrams, may be implemented by computer readable medium instructions.

The program modules, applications, computer-executable instructions, code, or the like depicted in FIG. 5are merely illustrative and not exhaustive and that processing described as being supported by any particular module may alternatively be distributed across multiple modules or performed by a different module. In addition, various program module(s), script(s), plug-in(s), Application Programming Interface(s) (API(s)), or any other suitable computer-executable code hosted locally, and/or hosted on other computing device(s) accessible via one or more of network, may be provided to support functionality provided by the program modules, applications, or computer-executable code and/or additional or alternate functionality. Further, functionality may be modularized differently such that processing described as being supported collectively by the collection of program modules may be performed by a fewer or greater number of modules, or functionality described as being supported by any particular module may be supported, at least in part, by another module. In addition, program modules that support the functionality described herein may form part of one or more applications executable across any number of systems or devices in accordance with any suitable computing model such as, for example, a client-server model, a peer-to-peer model, and so forth. In addition, any of the functionality described as being supported by any of the program modules depicted in FIG. 5 may be implemented, at least partially, in hardware and/or firmware across any number of devices.

It should further be appreciated that the computing system may include alternate and/or additional hardware, software, or firmware components beyond those described or depicted without departing from the scope of the disclosure. More particularly, it should be appreciated that software, firmware, or hardware components depicted as forming part of the computing system are merely illustrative and that some components may not be present or additional components may be provided in various embodiments. It should further be appreciated that each of the above-mentioned modules may, in various embodiments, represent a logical partitioning of supported functionality. This logical partitioning is depicted for ease of explanation of the functionality and may not be representative of the structure of software, hardware, and/or firmware for implementing the functionality. Accordingly, it should be appreciated that functionality described as being provided by a particular module may, in various embodiments, be provided at least in part by one or more other modules. Further, one or more depicted modules may not be present in certain embodiments, while in other embodiments, additional modules not depicted may be present and may support at least a portion of the described functionality and/or additional functionality. Moreover, while certain modules may be depicted and described as sub-modules of another module, in certain embodiments, such modules may be provided as independent modules or as sub-modules of other modules.

Although specific embodiments of the disclosure have been described, one of ordinary skill in the art will recognize that numerous other modifications and alternative embodiments are within the scope of the disclosure. For example, any of the functionality and/or processing capabilities described with respect to a particular device or component may be performed by any other device or component. Further, while various illustrative implementations and architectures have been described in accordance with embodiments of the disclosure, one of ordinary skill in the art will appreciate that numerous other modifications to the illustrative implementations and architectures described herein are also within the scope of this disclosure. In addition, it should be appreciated that any operation, element, component, data, or the like described herein as being based on another operation, element, component, data, or the like can be additionally based on one or more other operations, elements, components, data, or the like. Accordingly, the phrase "based on," or variants thereof, should be interpreted as "based at least in part on."

The flowchart and block diagrams in the Figures illustrate the architecture, functionality, and operation of possible implementations of systems, methods, and computer program products according to various embodiments of the present disclosure. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the Figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

## Claims

1. A system for real-time predictive failure monitoring of a robotic gripper alignment, comprising:
a sensor board embedded in a robotic gripper comprising:
a plurality of sensors including at least one motion sensor, at least one inclination sensor, and at least one accelerometer to generate sensor data comprising motion data, inclination data and accelerometer data respectively;
a processor; and
an alignment classification engine using machine learning based models to classify alignment and misalignment configuration of the robotic gripper based on received sensor data, wherein the detected misalignment configuration is a preventative measure against failure of the robotic gripper from execution of grasping tasks in an automated material processing system; wherein the alignment classification engine sends a notification to a user interface for both correct alignment and misalignment classifications in real-time.

2. The system of claim 1, wherein
the alignment classification engine is further configured to determine the most likely cause for misalignment; and
the notification includes a realignment recommendation indicating a particular fastener location as the most likely cause for misalignment.

3. The system of claim 1, wherein the machine learning based models include one of clustering algorithms, neural networks, or statistical models.

4. The system of claim 1, wherein the sensor board is embedded in a pocket milled in the gripper body and is sealed such that the sensor board is flush with the gripper body surface for optimum precision in calibration of gripper orientation.

5. The system of claim 1, wherein the sensor board is powered by wiring concealed within a physical channel of the gripper body.

6. The system of claim 1, wherein received sensor data further comprises:
proximity data generated by a proximity sensor configured to sense proximity of the robotic gripper to the tote, wherein the alignment classification engine incorporates the proximity sensor data for classification of alignment and misalignment configuration of the robotic gripper.

7. The system of claim 1, wherein received sensor data further comprises:
event data generated by a programable logic controller (PLC) triggered by events detected by the PLC relating to setpoints or anomalies in automated material processing system, wherein the alignment classification engine incorporates the event data for classification of alignment and misalignment configuration of the robotic gripper.

8. The system of claim 1, further comprising:
an audio sensor configured to detect sounds during manipulation of the tote for capturing anomalous sounds indicative of damage to tote integrity; and
a specialized classification engine capable of classifying a damaged tote, the specialized classification engine configured to generate a notification in response to a detected anomaly.

9. A method for real-time predictive failure monitoring of a robotic gripper alignment, comprising:
sensing, by a plurality of sensors on a sensor board embedded in a robotic gripper, 3 axis orientation of the robotic gripper, the plurality of sensors generating sensor data comprising motion data, inclination data and accelerometer data;
classifying, by an alignment classification engine, alignment and misalignment configuration of the robotic gripper based on received sensor data, wherein the detected misalignment configuration is a preventative measure against failure of the robotic gripper from execution of grasping tasks in an automated material processing system; wherein the alignment classification engine sends a notification to a user interface for both correct alignment and misalignment classifications in real-time.

10. The method of claim 9, further comprising:
determining the most likely cause for misalignment; and
including a realignment recommendation in the notification indicating a particular fastener location as the most likely cause for misalignment.

11. The method of claim 9, wherein the machine learning based models include one of clustering algorithms, neural networks, or statistical models.

12. The method of claim 9, further comprising:
powering the sensor board by wiring concealed within a physical channel of the gripper body.

13. The method of claim 9, wherein received sensor data further comprises proximity data generated by a proximity sensor configured to sense proximity of the robotic gripper to the tote, the method further comprising:
incorporating the proximity sensor data for classification of alignment and misalignment configuration of the robotic gripper.

14. The method of claim 9, wherein received sensor data further comprises event data generated by a programable logic controller (PLC) triggered by events detected by the PLC relating to setpoints or anomalies in automated material processing system, the method further comprising:
incorporating the event data for classification of alignment and misalignment configuration of the robotic gripper.

15. The method of claim 9, further comprising:
detecting, by an audio sensor, sounds during manipulation of the tote for capturing anomalous sounds indicative of damage to tote integrity; and
generating a notification in response to a detected anomaly.
